(19) Europäisches Patentamt
European Patent Office
Office européen des brevets

(11) **EP 4 102 253 B1**

(12) **FASCICULE DE BREVET EUROPEEN**

(45) Date de publication et mention de la délivrance du brevet:
**06.12.2023 Bulletin 2023/49**

(21) Numéro de dépôt: **22178508.2**

(22) Date de dépôt: **10.06.2022**

(51) Classification Internationale des Brevets (IPC):
**G01S 13/86** (2006.01)     **G01S 13/72** (2006.01)
**G01S 13/87** (2006.01)

(52) Classification Coopérative des Brevets (CPC):
**G01S 13/865; G01S 13/726; G01S 13/878**

(54) **PROCEDE ET DISPOSITIF DE SELECTION DES RESSOURCES CAPTEURS D'UN SYSTEME MULTI-CAPTEUR**

VERFAHREN UND VORRICHTUNG ZUR AUSWAHL VON SENSORRESSOURCEN EINES MULTISENSORSYSTEMS

METHOD AND DEVICE FOR SELECTING THE SENSOR RESOURCES OF A MULTI-SENSOR SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.06.2021 FR 2106107**

(43) Date de publication de la demande:
**14.12.2022 Bulletin 2022/50**

(73) Titulaire: **THALES**
**92190 Meudon (FR)**

(72) Inventeurs:
• HERNOUST, Thibault
  33700 MERIGNAC (FR)
• GRIVAULT, Ludovic
  78995 ELANCOURT (FR)
• STOFER, Daniel
  78990 ELANCOURT (FR)
• VAN EENOO, Nicolas
  78995 ELANCOURT (FR)

(74) Mandataire: **Atout PI Laplace**
**Immeuble "Visium"**
**22, avenue Aristide Briand**
**94117 Arcueil Cedex (FR)**

(56) Documents cités:
• DE FREITAS ALLAN ET AL: "Response Surface Modeling for Networked Radar Resource Allocation", 2018 21ST INTERNATIONAL CONFERENCE ON INFORMATION FUSION (FUSION), ISIF, 10 juillet 2018 (2018-07-10), pages 1-7, XP033398080, DOI: 10.23919/ICIF.2018.8455815
• NARYKOV ALEXEY S ET AL: "Sensor selection algorithm for optimal management of the tracking capability in multisensor radar system", 2013 EUROPEAN RADAR CONFERENCE, EMA, 9 octobre 2013 (2013-10-09), pages 499-502, XP032533775,
• YANG FENG ET AL: "The design of a multi-sensor tracking and fusion algorithms test-bed", CONTROL CONFERENCE, 2008. CCC 2008. 27TH CHINESE, IEEE, PISCATAWAY, NJ, USA, 16 juillet 2008 (2008-07-16), pages 768-772, XP031311359, ISBN: 978-7-900719-70-6
• "Novel Radar Techniques and Applications Volume 2: Waveform Diversity and Cognitive Radar, and Target Tracking and Data Fusion", Institution of Engineering and Technology , 1 octobre 2017 (2017-10-01), pages 157-193, XP055896219, DOI: 10.1049/SBRA512G_ch5 ISBN: 978-1-61353-228-7 Extrait de l'Internet: URL:https://www.researchgate.net/profile/Alexander-Charlish/publication/319880866_Cognitive_Radar_Management/links/5b0d0061aca2725783ec63ba/Cognitive-Radar-Management.pdf

## Description

### Domaine technique :

L'invention concerne de manière générale le domaine des capteurs et en particulier un procédé et un dispositif de contrôle de l'utilisation des capteurs dans un système multi-capteur.

Les systèmes multi-capteurs sont équipés d'un ensemble de capteurs hétérogènes fournissant des informations au système. Un système multi-capteur utilise les différentes informations délivrées par les différents capteurs pour exécuter des fonctions du système, comme par exemple des fonctions de contrôle du fonctionnement du système multi-capteur ou des fonctions propres aux missions du système multi-capteur.

Dans les solutions existantes, un opérateur responsable de la gestion du système doit à chaque demande opérationnelle, liée à une fonction du système, choisir des capteurs du système pour répondre à la demande opérationnelle. Généralement, l'opérateur choisit le sous-ensemble de capteurs qui permet d'obtenir un résultat le plus rapidement possible. Cependant, dans les cas où les ressources capteurs sont déjà très sollicitées, il arrive que l'opérateur choisisse des moyens moins classiques pour répondre à la demande. Par exemple, si le système utilise un capteur de type RADAR et qu'un tel capteur RADAR a fait une détection 3D et est très surchargé, l'opérateur peut recourir à une reconstruction d'une localisation 3D à partir d'information 2D obtenues par d'autres capteurs. Dans certaines situations, l'opérateur peut même se retrouver dans l'incapacité de répondre à certaines demandes très spécifiques en raison de l'indisponibilité d'un ou plusieurs capteurs, si ces capteurs sont surchargés et sont les seuls à pouvoir répondre à la demande (par exemple incapacité d'identifier pour un système de détection de cible de détecter une cible d'intérêt si le capteur optronique, qui est le seul à pouvoir remplir ce type d'action dans le système, est déjà surchargé).

Classiquement, pour gérer les ressources capteurs du système en fonction de la demande, l'opérateur responsable de la gestion des ressources capteurs doit prendre des décisions pour utiliser les ressources capteurs disponibles au mieux de leurs capacités, en anticipant en permanence les conséquences de ses décisions, sur la base de ses connaissances expérimentales et de son expertise.

Ainsi, les solutions actuelles d'optimisation des ressources capteurs reposent sur la sélection faite par l'opérateur, sur la base de ses connaissances. Ce type de solution a été décrit par exemple dans Sensor Management for Radar Networks Klemm, Richard; Griffiths, Hugh; Koch, Wolfgang: Novel radar techniques and applications. Vol.2: Waveform diversity and cognitive radar, and target tracking and data fusionHerts: SciTech Publishing, 2017 (DOI: 10.1049/SBRA512G_ch15) qui traite de l'optimisation des ressources dans un réseau de capteurs non hétérogènes.

Par ailleurs le document de FREITAS ALLAN ET AL: "Response Surface Modeling for Networked Radar Resource Allocation", 2018 21 ST INTERNATIONAL CONFERENCE ON INFORMATION FUSION, ISIF, 10 juillet 2018, pages 1-7, XP033398080, DOI: 10.23919/ICIF.2018.8455815 divulgue un dispositif de contrôle d'utilisation de capteurs d'un système multi-capteurs, le système étant apte à exécuter une ou plusieurs fonctions système sur les capteurs.

Cependant, de telles solutions sont coûteuses et requièrent un niveau d'expertise important de la part de l'opérateur. Elles limitent en outre l'interchangeabilité des opérateurs. Par ailleurs, l'opérateur peut avoir d'autres responsabilités de contrôle du système embarquant les ressources capteurs (pilote d'un avion par exemple). La processus de sélection des ressources capteurs disponible par l'opérateur peut requérir une forte monopolisation de l'opérateur, de manière constante, ce qui peut nuire à l'efficacité du contrôle général du système ou peut inversement impliquer une utilisation sous-optimale des ressources capteurs.

### Définition générale de l'invention :

L'invention vient améliorer la situation en proposant un dispositif de contrôle d'utilisation de capteurs d'un système multi-capteur, le système multi-capteur étant équipé de plusieurs capteurs comprenant au moins deux capteurs, le système étant apte à exécuter une ou plusieurs fonctions de système. Avantageusement, le dispositif comprend :

- une unité d'extraction d'alternatives d'utilisation de capteurs configurée pour extraire un ensemble d'alternatives d'utilisation de capteurs d'une base de données d'alternatives stockant un ensemble d'alternatives d'utilisation de capteurs, en réponse à la réception d'une requête indiquant un type de fonction du système et au moins une métrique de qualité, chaque alternative étant stockée dans la base de données en correspondance avec une fonction de système, chaque alternative étant associée à au moins un capteur et comprenant pour chaque capteur associé, un taux d'utilisation du capteur et une durée d'utilisation du capteur audit taux d'utilisation, l'unité d'extraction étant configurée pour extraire les alternatives d'utilisation de capteurs associée à ladite fonction de système ;

- une unité de prédiction comprenant un ensemble de modèles de performance de capteur, l'unité de prédiction étant configurée pour appliquer à chaque alternative et pour chaque capteur associé à l'alternative, le modèle de performance de capteur correspondant au capteur, le modèle de performance de capteur fournissant pour le capteur une valeur prédite pour chaque métrique de qualité, la valeur prédite correspondant à la valeur estimée de la métrique de qualité pour une utilisation du capteur au taux d'utilisation et pendant la durée associée au capteur dans l'alternative ;

- une unité de sélection d'alternatives candidates configurée pour sélectionner au moins certaines des alternatives en fonction des valeurs prédites des métriques de qualité pour les capteurs de chaque alternative extraite.

Dans un mode de réalisation, le dispositif peut comprendre en outre un module de calcul configuré pour calculer pour chaque alternative d'utilisation de capteurs une valeur prédite globale pour chaque métrique de qualité, la valeur prédite globale d'une métrique étant calculée à partir des valeurs prédites de la métrique de qualité pour tous les capteurs associés à l'alternative.

Le module de calcul peut être configuré pour calculer la valeur prédite globale d'une métrique à partir de paramètres relatifs au système, à la fonction de système indiquée dans la requête et/ou aux capteurs.

Dans un mode de réalisation, l'unité de sélection d'alternatives candidates peut être configurée pour filtrer au préalable les alternatives à partir des valeurs prédites globales des métriques de qualité calculées pour chaque alternative.

Chaque métrique de qualité peut être associée à une valeur cible dans la requête et en ce que le filtrage comprend une présélection des alternatives ayant pour chaque métrique de qualité une valeur prédite globale supérieure à la valeur cible de la métrique de qualité indiquée dans la requête, l'unité de sélection des alternatives candidates étant configurée pour sélectionner les alternatives candidates parmi les alternatives présélectionnées.

Chaque métrique de qualité spécifiée dans la requête peut être associée à un niveau de priorité, le dispositif comprenant alors une unité de calcul de poids d'alternative représentant le poids d'utilité de l'alternative sur le système, l'unité de calcul de poids d'alternative étant configurée pour calculer le poids de l'alternative sur le système en prenant en compte les niveaux de priorité associés aux métriques de qualité.

L'unité de calcul de poids d'alternative peut être configurée pour calculer le poids d'utilité $w_k$ d'une alternative selon l'équation :

$$w_k = \sum_{i=1}^{T}(Pi * Vi_k),$$

où $Vi_k$ désigne la valeur prédite globale calculée pour une métrique de qualité $Mi$, $Pi$ désigne le niveau de priorité associé à la métrique dans la requête, et $T$ désigne le nombre de métriques de qualité.

Dans un mode de réalisation, l'unité de sélection peut être configurée pour sélectionner au moins certaines des alternatives candidates en fonction des poids d'utilité associés aux alternatives.

Le poids d'utilité peut être une valeur définie entre une valeur de poids minimale et une valeur de poids maximale.

Dans des modes de réalisation, le dispositif de contrôle d'utilisation de capteur peut comprendre une table de sélection de priorité associant pour chaque fonction du système, un niveau de priorité à chaque métrique de qualité, le dispositif étant configuré pour déterminer le niveau de priorité de chaque métrique de qualité à partir de la table de sélection de priorité, pour la fonction de système spécifiée dans la requête.

Le niveau de priorité peut être défini pour chaque métrique de qualité dans la requête.

Le modèle de performance de capteur peut être un modèle défini à partir d'une technique d'intelligence artificielle à base d'apprentissage sur des données réelles de performance, les données réelles comprenant des valeurs de métriques de qualité obtenues par le système pour des capteurs utilisés par le système pour exécuter chaque fonction de système.

Chaque alternative d'utilisation de capteurs peut comprendre une valeur fixe pour le taux d'utilisation et la durée associée à chaque capteur.

Chaque alternative d'utilisation de capteurs peut comprendre pour au moins un capteur de l'alternative, une plage de valeurs définie pour le taux d'utilisation et/ou la durée associée au capteur, l'unité de prédiction étant configurée pour sélectionner au préalable, pour le capteur une valeur fixe dans la plage de valeur définie pour le taux d'utilisation et/ou la durée associée au capteur avant la détermination de valeurs prédites de métriques de qualité pour le capteur.

Il est en outre proposé un procédé de contrôle d'utilisation de capteurs mis en oeuvre dans un système multi-capteur, le système multi-capteur étant équipé de plusieurs capteurs comprenant au moins deux capteurs, le système étant apte à exécuter une ou plusieurs fonctions de système. Avantageusement, le procédé comprend les étapes consistant à :

- extraire un ensemble d'alternatives d'utilisation de capteurs d'une base de données d'alternatives stockant un ensemble d'alternatives d'utilisation de capteurs, en réponse à la réception d'une requête indiquant un type de fonction du système et au moins une métrique de qualité, chaque alternative étant stockée dans la base de données en correspondance avec une fonction de système, chaque alternative étant associée à au moins un capteur et comprenant pour chaque capteur associé, un taux d'utilisation du capteur et une durée correspondant à une durée d'utilisation du capteur selon le taux d'utilisation, l'étape d'extraction comprenant l'extraction des alternatives d'utilisation de capteurs associée à ladite fonction de système ;

- appliquer à chaque alternative et pour chaque capteur associé à l'alternative, un modèle de performance de capteur correspondant au capteur, le modèle de performance de capteur fournissant pour le capteur une valeur prédite pour chaque métrique de qualité, la valeur prédite correspondant à la valeur estimée de la métrique de qualité pour une utilisation du capteur au taux d'utilisation et pendant la durée associée au capteur dans l'alternative ;

- sélectionner au moins certaines des alternatives en fonction des valeurs prédites des métriques de qualité pour les capteurs de chaque alternative extraite.

**Brève description des figures :**

D'autres caractéristiques, détails et avantages de l'invention ressortiront à la lecture de la description faite en référence aux dessins annexés donnés à titre d'exemple et qui représentent, respectivement :

[Fig.1] La figure 1 représente un système multi-capteur, selon certains modes de réalisation ;

[Fig.2] La figure 2 représente un dispositif de contrôle d'utilisation des capteurs du système, selon certains modes de réalisation ;

[Fig.3A] La figure 3A représente un exemple d'implémentation du dispositif de contrôle d'utilisation des capteurs du système, selon un mode de réalisation ;

[Fig.3B] La figure 3B représente une unité de calcul d'indicateur d'impact selon un exemple de réalisation ; et

[Fig.4] La figure 4 est un organigramme représentant un procédé de contrôle d'utilisation des capteurs du système selon certains modes de réalisation.

**Description détaillée de l'invention :**

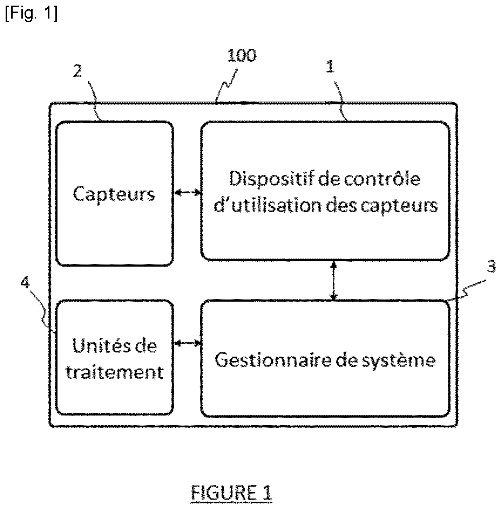

La figure 1 représente un système multi-capteurs 100 selon des modes de réalisation de l'invention.

Le système multi-capteur 100 comprend un ensemble de capteurs 2, chaque capteur 2 étant configuré pour effectuer des mesures et pour fournir en sortie ces mesures au système multi-capteur 100. Le système multi-capteur 100 est configuré pour mettre en oeuvre un ensemble de fonctions (encore appelées 'fonctions de systèmes'). Les fonctions de système peuvent être par exemple un service fourni par le système multi-capteur 100.

Le système multi-capteur 100 peut être tout type de système embarquant une pluralité de capteurs 2 (au moins deux capteurs) et utilisant les données relevées par les capteurs 2 pour exécuter des fonctions du système.

Le système multi-capteur 100 peut évoluer dans des environnements dynamiques.

Le système multi-capteur 100 peut être mobile ou statique.

Les capteurs 2 du système multi-capteur 100 peuvent comprendre un ensemble de $P$ capteurs hétérogènes (capteurs de types différents) ou homogènes (de même type). Par exemple le système multi-capteur 100 peut inclure des capteurs RADAR, LIDAR, Caméra.

Le système multi-capteur 100 peut être par exemple, et sans limitation, un système aérien (avion), un système aéroporté (drone), un système aéronautique ou spatial, un système naval (bâtiment de surface), un système sous-marin, un véhicule automatisé ou semi-automatisé, etc.

Le système multi-capteur 100 peut être un système comprenant des sous-systèmes de différents types (par exemple un système aéroporté, un système terrestre et un système naval), tel qu'un système collaboratif.

Le système multi-capteur 100 comprend avantageusement un dispositif de contrôle 1 d'utilisation des capteurs configuré pour contrôler l'utilisation des capteurs 2 du système multi-capteur 100.

Le dispositif de contrôle 1 est configuré pour sélectionner dynamiquement et en temps réel les capteurs 2 à utiliser en réponse à une demande de ressources capteurs (encore appelée ci-après « demande opérationnelle » ou requête) parmi les capteurs 2 disponibles. La demande opérationnelle est associée à au moins une fonction du système (fonction de système demandée). Dans un mode de réalisation, la demande opérationnelle comprend un paramètre indiquant un type de fonction du système multi-capteur. La demande opérationnelle comprend en outre au moins une métrique de qualité. La demande opérationnelle représente une requête d'exécution de fonction de système (par exemple demande de fonction de détection) nécessitant des données issues de capteurs du système 100.

Le système multi-capteur 100 peut comprendre un gestionnaire de système 3 configuré pour requérir l'utilisation des capteurs 2 du système, en utilisant l'information de sélection de capteur(s) déterminée par le dispositif de contrôle 1.

Le gestionnaire de système 3 peut notamment contrôler l'exécution de la fonction associée à la demande opérationnelle reçue en utilisant l'information fournie par le dispositif de contrôle 1 d'utilisation de capteurs. Le gestionnaire de système 3 peut ainsi lancer l'exécution de la fonction associée à la demande opérationnelle à partir des données mesurées par les capteurs sélectionnés par le dispositif de contrôle 1.

Les fonctions de système mises en oeuvre par le système multi-capteur 100 peuvent inclure différentes fonctions du système 100, telles que par exemple et sans limitation des fonctions dédiées au fonctionnement propre du système (fonction de conduite), des fonctions destinées à garantir la sécurité du système (fonction de contrôle) ou des fonctions relatives à des missions du système (par exemple, fonction de détection d'objet).

Les fonctions de système peuvent être exécutées par une ou plusieurs unités de traitement, en utilisant les données retournées pas les capteurs sélectionnées par le dispositif de contrôle 1.

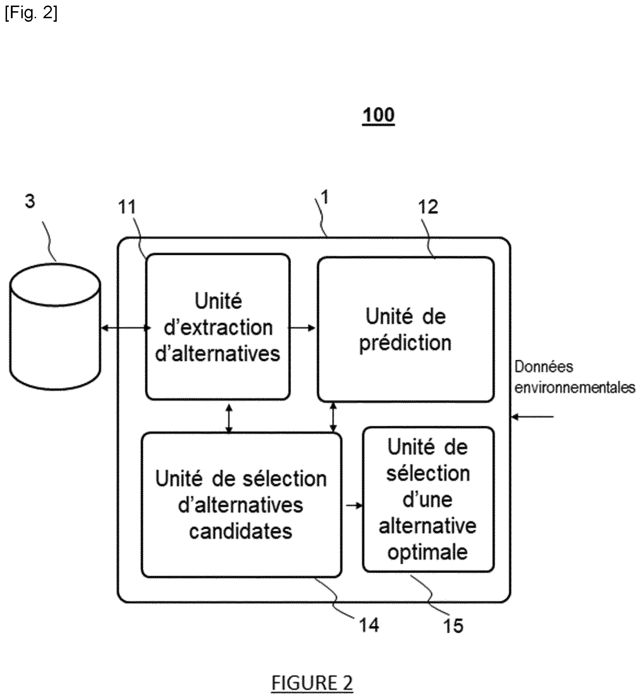

La figure 2 est un diagramme représentant le dispositif de contrôle d'utilisation des capteurs 1 selon certains modes de réalisation.

Le dispositif de contrôle 1 comprend une unité d'extraction d'alternatives d'utilisation de capteurs 11 configurée pour extraire un ensemble d'alternatives d'utilisation de capteurs d'une base de données 3 stockant un ensemble d'alternatives, en réponse à la réception d'une demande opérationnelle ('requête') indiquant un type de fonction du système et au moins une métrique de qualité. La base de données d'alternatives 3 peut être stockée dans le système 100 à partir d'informations reçues de sources externes ou prédéterminées par le dispositif de contrôle 1.

La base de données d'alternatives 3 peut stocker une bibliothèque d'alternatives, préétablie, spécifique au système 100 et aux différents capteurs 2 qu'il embarque. La bibliothèque d'alternatives peut être réutilisée lorsque le système 100 est opérationnel, quelle que soit les fonctions réalisées par le système 100, sans qu'il soit nécessaire de la modifier. Dans un mode de réalisation, la base de données d'alternatives 3 peut être mise à jour dynamiquement en tenant compte des données collectées pendant le fonctionnement du système 100.

Chaque alternative de capteur est stockée dans la base de données d'alternatives en correspondance avec une fonction de système, chaque alternative étant associée à au moins un capteur et comprenant pour chaque capteur associé à l'alternative :

- un taux d'utilisation n du capteur, par exemple exprimé en pourcentage (n%) de la capacité totale du capteur ; et

- une durée d correspondant à une durée d'utilisation du capteur selon le taux d'utilisation du capteur (durée d'utilisation des n% du capteur).

Telle qu'utilisée ici, une alternative d'utilisation de capteurs correspond ainsi à un ensemble de capteurs comprenant au moins un capteur et comprend pour chaque capteur de l'ensemble de capteur, le taux *n* et la durée *d*. Une alternative de capteurs désigne ainsi une combinaison de capteurs 2 pouvant être utilisée pour la mise en oeuvre de la fonction de système, au taux de charge *n* et pendant la durée *d* associés à chaque capteur. Le dispositif de contrôle 1 permet ainsi de déterminer une alternative de capteurs à utiliser pour la mise en oeuvre de la fonction de système, la fonction de système étant alors exécutée en utilisant les données des capteurs de l'alternative sélectionnée, chaque capteur 2 étant utilisé au taux de charge *n* et pendant la durée *d* associés.

La durée *d* peut être définie à partir d'une date t (durée d'utilisation de l'ensemble de capteurs à partir de la date t).

L'unité d'extraction 11 est configurée pour extraire les alternatives d'utilisation de capteurs associée à la fonction de système indiquée dans la demande opérationnelle.

Le dispositif de contrôle 1 comprend en outre une unité de prédiction 12 comprenant un ensemble de modèles de performance de capteur 120, chaque modèle de performance de capteur étant associé à un capteur. L'unité de prédiction 12 est configurée pour appliquer à chaque alternative de capteurs et, pour chaque capteur associé à l'alternative, le modèle de performance de capteur 120 correspondant au capteur. Le modèle de performance de capteur associé à un capteur est configuré pour fournir, pour un taux d'utilisation et une durée du capteur, une valeur prédite pour chaque métrique de qualité spécifiée dans la demande opérationnelle. La valeur prédite correspond à la valeur estimée de la métrique de qualité pour une utilisation du capteur au taux d'utilisation et pendant la durée associée au capteur dans l'alternative.

L'unité de prédiction 12 peut fournir ainsi pour une alternative d'utilisation de capteur extraite et, pour chaque capteur de l'alternative de capteur, une valeur prédite pour chaque métrique de qualité spécifiée dans la demande opérationnelle.

L'unité de prédiction 12 peut comprendre un module de calcul 121 configuré pour calculer, pour chaque alternative d'utilisation de capteur extraite, une valeur prédite globale pour chaque métrique de qualité spécifiée dans la demande opérationnelle ou une information indiquant l'impossibilité d'utilisation de l'alternative, à partir des valeurs prédites des métriques de qualité déterminées pour les différents capteurs de l'alternative de capteur.

L'unité de prédiction de performances 12 permet ainsi d'estimer grâce aux modèles de performances des différents capteurs 2 du système 100, quels seront les résultats obtenus par les capteurs 2 au cours de l'exécution de la fonction de système demandée dans la demande opérationnelle.

Un capteur d'une alternative d'utilisation de capteurs peut comprendre une valeur fixe pour le taux d'utilisation n qui lui est associé et/ou pour la durée d qui lui est associée. En variante, un capteur d'une alternative d'utilisation de capteurs peut comprendre une plage de valeur pour le taux d'utilisation n qui lui est associé et/ou pour la durée d qui lui est associée. Selon cette variante de réalisation, l'unité de prédiction 12 peut être configurée pour sélectionner au préalable, pour le capteur, une valeur fixe dans la plage de valeur définie pour le taux d'utilisation et/ou pour la durée associée au capteur avant la détermination de valeurs prédites de métriques de qualité pour le capteur.

Le dispositif de contrôle d'utilisation de capteurs 1 comprend également une unité de sélection d'alternatives candidates 14 configurée pour sélectionner au moins certaines des alternatives d'utilisation de capteurs extraites en fonction des valeurs prédites des métriques de qualité pour les capteurs de chaque alternative. L'unité de sélection d'alternative candidates 14 peut par exemple être configurée pour sélectionner L alternatives parmi toutes les alternatives de capteurs (L<P avec P désignant le nombre total d'alternatives présélectionnées par l'unité d'extraction). Les alternatives candidates sélectionnées peuvent être délivrées au gestionnaire du système 3. Le gestionnaire de système peut générer un affichage des alternatives candidates sélectionnées à un opérateur du système 100 qui sélectionnera l'une des alternatives candidates et commandera l'exécution de la fonction de système demandée dans la demande opérationnelle en utilisant les capteurs de l'alternative sélectionnée, chacun au taux d'utilisation et pendant la durée d'utilisation associés. En variante, le dispositif de contrôle peut comprendre une unité de sélection d'alternative optimale 15 configurée pour sélection une alternative optimale parmi une des alternatives candidates en fonction de un ou plusieurs critères de sélection.

Le dispositif de contrôle d'utilisation de capteurs 1 permet ainsi de déterminer la meilleure alternative de capteurs à utiliser pour répondre à la demande opérationnelle à partir des prédictions de valeurs des métriques de qualité.

Les métriques de qualité indiquée dans la demande opérationnelle peuvent comprendre une ou plusieurs métriques de qualité correspondant aux métriques de qualité à respecter pour répondre à la demande opérationnelle (métriques de qualité devant être satisfaites en réponse à l'exécution de la fonction de système). Chaque métrique de qualité spécifiée dans la demande opérationnelle peut être associée à une valeur cible ou à une plage de valeurs représentant les valeurs minimales devant être atteintes par les métriques de qualité, en réponse à l'exécution de la fonction de système.

Dans une application de l'invention à un système multi-capteur de détection d'objet ou de cible 100, les métriques de qualité peuvent par exemple comprendre une métrique de précision, une métrique de rapidité de résultat, une métrique de zone couverte, et/ou une métrique de discrétion.

Dans un mode de réalisation, la demande opérationnelle peut en outre comprendre un niveau de priorité associé à chaque métrique de qualité.

En variante, le niveau de priorité associé à chaque métrique de qualité peut être prédéterminé en utilisant une table de sélection de priorité. Dans un tel mode de réalisation, le dispositif de contrôle d'utilisation de capteurs 1 peut comprendre une table de sélection de priorité associant pour chaque fonction du système, un niveau de priorité à chaque métrique de qualité, le dispositif étant configuré pour déterminer le niveau de priorité de chaque métrique de qualité à partir de la table de sélection de priorité, pour la fonction de système spécifiée dans la requête.

Dans un mode de réalisation, le dispositif de contrôle d'utilisation de capteurs 1 peut être configuré pour convertir la valeur ou chaque valeur extrême de la plage de valeurs associée à chaque métrique de qualité en une valeur ayant un format cible, en utilisant une table de conversion spécifique au type de fonction de système indiqué dans la demande opérationnelle. Une telle conversion permet par exemple de convertir les valeurs des métriques de précision en des valeurs banalisées. Par exemple, pour un type de fonction de système demandée correspondant à un suivi de détection air, une métrique de précision de détection de 100 mètres spécifiée dans la demande opérationnelle peut être transformée en une valeur égale à 3/5 pour la métrique de précision (la métrique de précision est ainsi mise à la valeur 3/5).

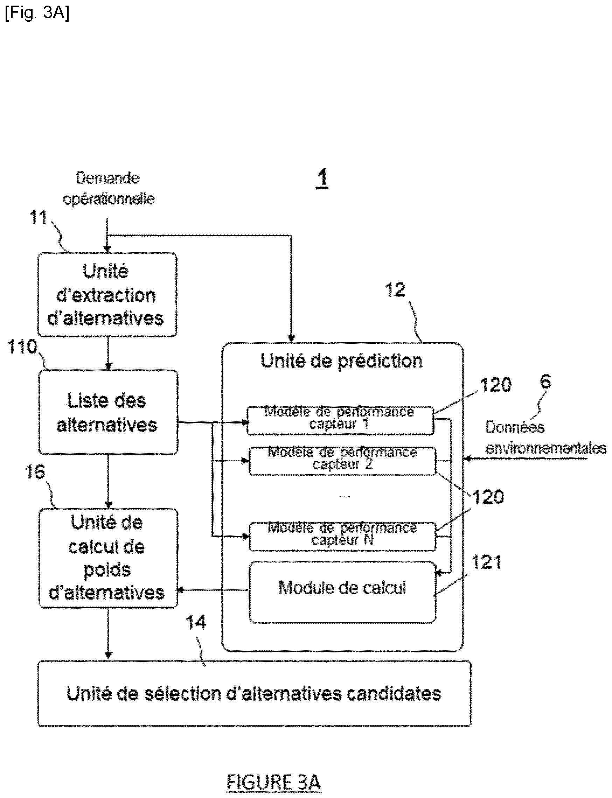

La figure 3A représente un exemple d'implémentation du dispositif de contrôle d'utilisation de capteurs selon certains modes de réalisation.

Chaque modèle de performances 120 est propre au capteur 2 qui lui est associé.

Chaque modèle de performance de capteur 120 peut être un modèle généré en utilisant une ou plusieurs technique d'intelligence artificielle à base d'apprentissage pour entraîner le modèle sur des données réelles de performance (par exemple des techniques basées sur des réseaux de neurones entraînés). Les données réelles peuvent comprendre des valeurs de métriques de qualité effectivement obtenues par le système pour exécuter les fonctions de système en utilisant chaque capteur. En variante, chaque modèle de performance de capteur 120 peut être un modèle expert, construit par un expert à partir de son expertise, sans apprentissage.

Les modèles de performances peuvent être utilisés sans limitation quel que soit le mode de fonctionnement ou les missions réalisées par le système 100.

Les modèles de performance de capteur 120 peuvent être générés hors ligne ou, en variante, de manière dynamique, pendant l'utilisation du dispositif de contrôle d'utilisation de capteurs, en fonction de l'application de l'invention. Le modèle de performance permet ainsi de projeter les alternatives extraites par l'unité d'extraction 11 sur les données d'environnement 6 du système multi-capteur 100. Dans un mode de réalisation, les modèles de performance 120 peuvent être mis à jour en utilisant les données apprises par le système 100 pendant son fonctionnement.

Le module de prédiction 102 peut être en outre configuré pour transformer les alternatives extraites en alternatives transformées, en utilisant les modèles de performance pour sélectionner une valeur dans la plage de valeurs du taux d'utilisation et/ou de la durée associée au capteur dans l'alternative correspondante, si de tels paramètres n'ont pas de valeur fixe et transformer l'alternative extraite en alternative transformée comprenant pour ledit capteur la valeur sélectionnée dans la plage de valeurs.

Pour chaque alternative, les performances de chacun des capteurs 2 peuvent ainsi être estimées via le modèle de performances de capteur 120 associé, en appliquant l'état de l'environnement dans lequel évolue le système 100 (par exemple, météo, situation tactique, brouillage, ...). Pour chaque capteur, la prédiction de performance réalisée par l'unité de prédiction est réalisée selon T axes correspondant au T métriques de qualités spécifiées dans la demande opérationnelle. Le module de calcul 121 permet de synthétiser une prédiction de performance globale réalisée pour chaque alternative sur les mêmes T axes en utilisant une logique de remontée des résultats obtenus par chacun des capteurs 2 de l'alternative.

Le module de calcul 121 de l'unité de prédiction 12 est configuré pour déterminer une prédiction de performance globale réalisée pour chaque alternative correspondant à un ensemble de valeurs prédites globales pour les différentes métriques de qualité spécifiées dans la demande opérationnelle, la valeur prédite globale d'une métrique de qualité étant calculée à partir des valeurs prédites pour les différentes métriques de qualité pour chaque capteur 2 de l'alternative. Le module de calcul met ainsi en oeuvre une formule de calcul fournissant la valeur prédite globale d'une métrique de qualité pour une alternative donnée en fonction des valeurs prédites de la métrique pour les différents capteurs 2 associés à l'alternative. Dans des modes de réalisation, la formule de calcul mise en oeuvre peut être fonction de d'autres paramètres liés au système 100, à la fonction de système demandée dans la demande opérationnelle, et/ou au type des capteurs de l'alternative.

Dans la suite de la description, une alternative d'utilisation de capteur sera notée $A_k$ et le nombre de capteurs qui lui est associée sera noté $N_k$. Par ailleurs, chaque métrique de qualité spécifié dans la demande opérationnelle sera notée $M_i$ ($1 \leq i \leq T$), avec $T$ correspondant au nombre total de métriques de qualité spécifié dans la demande opérationnelle. La valeur cible de chaque métrique de qualité $M_i$ spécifiée dans la demande opérationnelle sera notée $Vi_{cible}$.

Dans un exemple de réalisation, le module de calcul 121 de l'unité de prédiction 12 peut par exemple calculer, pour une alternative $A_k$ d'utilisation de capteurs la valeur prédite globale $Vi_k$ pour chaque métrique de qualité $M_i$ ($1 \leq i \leq T$), en sélectionnant la valeur prédite minimale parmi les valeurs prédites $v_{ij}$ pour tous les $N_k$ capteurs $C_{jk}$ de l'alternative $A_k$:

$$Vi_k = \min_{1 \leq j \leq P_k} v_{ij}$$

Dans un exemple d'application de l'invention à un système 100 configuré pour détecter des cibles, le module de calcul 121 de l'unité de prédiction peut en outre prendre en compte les positions relatives de chaque capteur dans le système 100 et une estimation de la position de la cible .

Par exemple, il est considéré un exemple d'application de l'invention à un système de détection de cible 100. Il est supposé que la demande opérationnelle reçue est une demande de détection 3D de cible, et que pour cette demande, une alternative de capteurs $A_1$ constituée d'un capteur $C_{1_1}$ de Guerre électronique (fournissant une détection en 2D) et un télémètre laser $C_{2_1}$ (configuré pour calculer la distance de la cible) est extraite par l'unité d'extraction 11. L'unité de prédiction 12 fournit pour chaque métrique de qualité $M_i$ :

- une valeur prédite $v_{i1}$ spécifiée dans la demande pour le capteur $C_{1_1}$ (en utilisant le modèle de performance 120 associé au capteur $C_{1_1}$), et

- une valeur prédite $v_{i1}$ pour le capteur $C_{2_1}$ (en utilisant le modèle de performance 120 associé au capteur $C_{1_2}$).

Dans cet exemple, le module de calcul 121 de l'unité de prédiction 12 peut calculer la valeur prédite globale $Vi_1$ pour chaque métrique de qualité, pour toute l'alternative, en sélectionnant, pour chaque métrique de qualité $M_i$, la valeur minimale prédite parmi les valeurs prédites tous les capteurs de l'alternative :

$$Vi_1 = \min\ (v_{i1}, v_{i2})$$

En considérant maintenant le même exemple d'application de l'invention à un système de détection de cible 100 et la même demande opérationnelle de détection 3D, mais une alternative de capteurs $A_1$ comprenant deux capteurs de Guerre électroniques $C_{11}$ et $C_{12}$ positionnés à deux endroits différents du système 100 (pour effectuer une détection 3D par triangulation de deux détections 2D), le module de calcul 121 de l'unité de prédiction 12 peut mettre en oeuvre un calcul plus complexe à partir des valeurs prédites $v_{ij}$ pour les différentes métriques de qualité pour chaque capteur $C_{11}$ et $C_{12}$ de l'alternative $A_1$, des positions relatives de chaque capteur $C_{11}$ et $C_{12}$, et de l'estimation de la position de la cible.

L'unité de sélection d'alternatives candidates 14 peut alors mettre en oeuvre un filtrage préalable pour sélectionner toutes les alternatives $A_k$ qui ont pour chaque métrique de qualité $M_i$ une valeur prédite globale $V_{ik}$ qui satisfait la valeur cible $Vi_{cible}$ de la métrique de qualité spécifiée (valeur minimale à satisfaire) dans la demande opérationnelle, soit $V_{ik} \geq Vi_{cible}$.

Dans des modes de réalisation, le dispositif de contrôle d'utilisation de capteurs 1 peut comprendre une unité de calcul de poids d'alternatives (encore appelé « score d'utilité ») 16 configurée pour calculer le poids $w_k$ de chaque alternative $A_k$ de capteurs extraite par l'unité d'extraction 11 sur le système 100. Le poids $w_k$ d'une

alternative $A_k$ représente l'utilité opérationnelle associée à l'alternative, c'est-à-dire le niveau de plus-value qui sera apporté au système 100 si cette alternative est choisie pour la mise en oeuvre de la fonction de système demandée.

Le poids d'une alternative est compris entre une valeur de poids minimale et une valeur de poids maximale.

Le poids d'une alternative représente le poids d'utilité opérationnelle de l'alternative sur le système 100 pour l'exécution de la fonction de système, chacun au taux d'utilisation $n$ et à la durée $d$ associés, pour répondre à la demande opérationnelle.

L'unité de calcul de poids d'alternative 16 peut être configurée pour calculer le poids d'une alternative d'utilisation de capteurs sur le système 100 en prenant en compte les niveaux de priorité associés aux métriques de qualité $Mi$ spécifiées dans la demande opérationnelle.

Dans un mode de réalisation, l'unité de calcul de poids d'alternative 16 est configurée pour calculer le poids d'une alternative $w_k$ en effectuant pour chaque métrique de qualité $M_i$, le produit scalaire $Pi * Vi_k$ entre la valeur prédite moyenne calculée pour la métrique de qualité et le niveau de priorité associé à la métrique de qualité dans la requête, et en sommant les produits scalaires pour toutes les métriques $M_i$, avec $i = 1$ à T, selon l'équation (1) :

$$w_k = \sum_{i=1}^{T}(Pi * Vi_k) \quad (1)$$

Dans l'équation (1), $Pi$ désigne le niveau de priorité et $Vi_k$ désigne la valeur prédite globale pour chaque métrique de qualité $M_i$.

Dans un tel mode de réalisation, l'unité de sélection d'alternatives candidates 14 peut être configurée pour sélectionner au moins certaines des alternatives en fonction des poids calculés pour chaque alternative extraite. En particulier, l'unité de sélection d'alternatives candidates 14 peut être configurée pour sélectionner l'alternative qui maximise le poids d'utilité parmi les $L$ alternatives candidates :

$$A_k = \max_{k=1 \text{ à } L} w_k$$

Dans un exemple d'application de l'invention à un avion de combat équipé de capteurs, la demande opérationnelle reçue par le système peut comprendre par exemple :

- Un type de fonction de système « suivi de détection air » ;

- Quatre métriques de qualités, chacune associée à des valeurs cibles (valeurs minimales des métriques de qualité devant être satisfaite pour répondre à la demande opérationnelle) : une métrique de Précision M1 ayant une valeur cible égale à 3/5, une métrique de Rapidité de résultat M2 ayant une valeur cible égale 2/5, une métrique de Zone couverte M3 ayant une valeur cible égale à 1/5, une métrique de Discrétion M4 ayant une valeur cible égale à 1/5.

Des niveaux de priorité associés à chacune des quatre métriques de qualité comprenant : une priorité P1 associée à la métrique de Précision égale à 80%, une priorité P2 associée à la métrique de Rapidité de résultat égale à 20%, une priorité P3 associée à la métrique de Zone couverte égale à 0%, une priorité P4 associée à la métrique de Discrétion égale à 0%.

Il est en outre considéré, dans cet exemple, que les alternatives de capteur extraites le système multi-capteur 100 de type avion de combat pour le type de fonction de système 'suivi de détection air' spécifié dans la demande opérationnelle comprennent les trois alternatives suivantes :

- Une première alternative de suivi radar, associée à un seul capteur de type radar, avec pour le capteur radar : un taux d'utilisation $n_1$ de 15% et une durée d'utilisation $d_1$ de 0,1s ;
- Une alternative de suivi de Guerre Électronique, associée à un seul capteur de type Guerre Électronique, avec pour le capteur de Guerre Électronique : un taux d'utilisation $n_2$ de 1% et une durée d'utilisation $d_2$ de 3 s.

Une alternative de suivi Optronique, associée à un seul capteur de type capteur Optronique, avec pour le capteur optronique : un taux d'utilisation $n_3$ de 1% et une durée d'utilisation $d_3$ de 0,5 s.

Dans un tel exemple d'application, l'unité de prédiction 12 peut ensuite déterminer, pour chacune des trois alternatives, et pour chacun des capteurs de chaque alternative, des valeurs prédites pour les quatre métriques de qualité spécifiés dans la demande opérationnelle obtenues pour chaque alternative extraite par l'unité d'extraction 11.

Par exemple, les valeurs prédites des quatre métriques de qualité, déterminée par l'unité de prédiction 12, peuvent comprendre pour la première alternative de suivi Radar, et pour le capteur radar de cette première alternative :

- Valeur prédite de Métrique de Précision = 5/5 ;

- Valeur prédite de Métrique de Rapidité de résultat= 4/5 ;

- Valeur prédite de Métrique de Zone couverte= 2/5 ; et

- Valeur prédite de Métrique de Discrétion = 1/5.

Par exemple, les valeurs prédites des quatre métriques de qualité comprennent pour la deuxième alternative de Suivi de Guerre Électronique, et pour le capteur de Guerre Électronique de cette deuxième alternative :

- Valeur prédite de Métrique de Précision = 3/5 ;

- Valeur prédite de Métrique de Rapidité de résultat= 3/5 ;

- Valeur prédite de Métrique de Zone couverte= 4/5 ; et

- Valeur prédite de Métrique de Discrétion = 5/5.

Dans le cas de la troisième alternative de Suivi Optronique, et pour le capteur Optronique de cette troisième alternative, l'unité de prédiction 12 peut retourner une valeur indiquant que l'utilisation de l'alternative est impossible pour atteindre les métriques de qualité minimales (dans cet exemple, la mise en oeuvre de l'alternative suivi optronique est impossible car hors de portée du capteur).

L'unité de sélection d'alternatives candidates 14 sélectionne les alternatives candidates en fonction des valeurs prédites pour les métriques de qualité, pour chaque alternative et pour chaque capteur d'une alternative. Dans l'exemple ci-dessus, l'unité de sélection d'alternatives candidates 14 peut par exemple sélectionner la première et la deuxième alternatives qui ont les valeurs prédites de métriques de qualité répondant au mieux à la demande opérationnelle, à savoir l'alternative de « Suivi radar » et l'alternative de « Suivi GE ».

Dans un mode de réalisation, l'unité de sélection d'alternatives candidates 14 peut sélectionner l'alternative candidate qui maximise le poids de l'alternative calculé selon l'équation (1) :

- Le poids $w_{radar}$ de l'alternative de suivi radar est égal à : $w_{radar}$ = 5 * 80% + 4 * 20% + 2 * 0% + 1 * 0% = 4.8 ; et
- Le poids $w_{GE}$ de l'alternative de suivi de Guerre Electronique est égal à : : $w_{GE}$ = 3 * 80% + 3 * 20% + 4 * 0% + 5 * 0% = 3.

Ainsi, l'alternative candidate qui maximise le poids d'alternative est l'alternative de suivi radar (4.8>3). L'unité de sélection d'alternative candidate 14 peut ainsi sélectionner cette seule alternative de suivi radar.

Il est à noter que sans l'exemple ci-dessus, si la demande opérationnelle avait spécifié une métrique de précision ayant une valeur cible égale à 4/5, l'unité de sélection d'alternatives candidates 14 aurait sélectionné l'alternative de « Suivi radar » uniquement. En variante, si la demande opérationnelle avait spécifié une métrique de discrétion ayant une valeur cible égale à 2/5, l'unité de sélection d'alternatives candidates 14 aurait sélectionné seulement l'alternative de « Suivi GE ».

Dans un mode de réalisation, l'unité de sélection d'alternative optimale 15 peut par exemple comprendre un module de détermination d'impact d'alternative configuré pour déterminer un indicateur d'impact pour chaque alternative candidate sélectionnée par l'unité de sélection d'alternatives candidates 14, l'unité de sélection d'alternative optimale 15 étant alors configuré pour choisir une alternative optimale parmi les alternatives candidates à partir de l'indicateur d'impact calculé pour chaque alternative candidate. L'indicateur d'impact d'une alternative représente l'impact de l'utilisation de tous les capteurs de l'alternative, chacun au taux d'utilisation n et pendant la durée d associée au capteur dans l'alternative de capteur, pour répondre à la fonction de système spécifiée dans la requête. L'indicateur d'impact d'une alternative de capteurs peut être déterminé en calculant un indicateur d'impact élémentaire de capteur pour chaque capteur de l'alternative et en sommant les différents indicateurs d'impact élémentaires calculés pour tous les capteurs de l'alternative. L'indicateur d'impact élémentaire d'un capteur peut être déterminé en multipliant au moins deux facteurs relatifs à la durée d'utilisation du capteur et/ou à la charge du capteur et/ou à l'environnement du capteur, tels qu'un facteur de durée d'utilisation du capteur, un facteur de charge du capteur et un facteur de criticité du capteur.

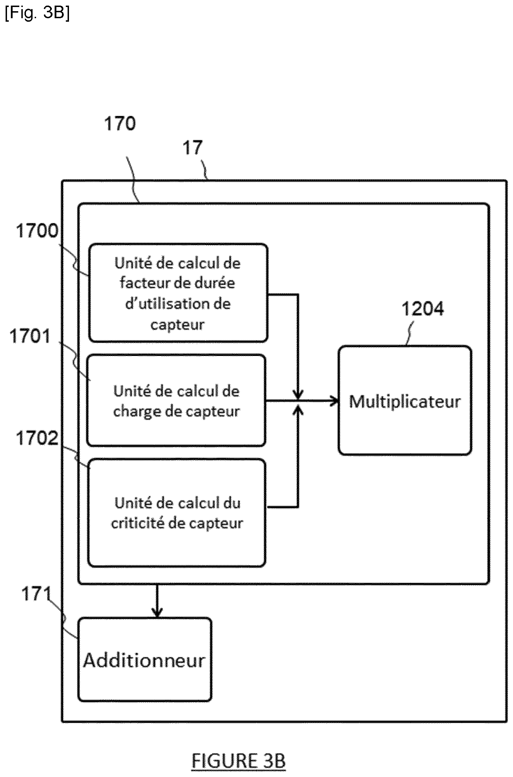

La figure 3B représente une unité de calcul d'indicateur d'impact 17 selon un exemple de réalisation. L'unité de calcul d'indicateur d'impact 17 comprend une unité de calcul d'indicateur d'impact élémentaire 170 configurée pour calculer, pour chaque alternative $A_k$ et pour chaque capteur $C_{jk}$ de l'alternative, un indicateur d'impact élémentaire $I_{jk}$ représentant l'impact de l'utilisation du capteur $C_{jk}$ de l'alternative, au taux d'utilisation $n$ et pendant la durée $d$ associée au capteur dans l'alternative de capteur, pour répondre à la fonction de système spécifiée dans la requête. L'indicateur d'impact élémentaire $I_{jk}$ d'un capteur $C_{jk}$ représente ainsi une notation de l'impact de l'utilisation de n% du capteur $C_{jk}$ pendant d secondes à la date $t$.

L'unité de calcul de l'indicateur d'impact 17 peut comprendre en outre un additionneur 171 configuré pour additionner les indicateurs d'impact élémentaires $I_{jk}$ déterminés pour tous les capteurs de l'alternative, ce qui fournit l'indicateur d'impact $I_k$ d'utilisation de l'alternative. L'indicateur d'impact $I_k$ d'une alternative $A_k$ est ainsi défini par :

$$I_k = \sum_{j=1}^{N_k} I_{jk} \quad (1)$$

Dans l'équation (1), $N_k$ désigne le nombre de capteurs $C_{jk}$ de l'alternative $A_k$.

L'unité de calcul d'indicateur d'impact élémentaire 170 est configurée pour calculer, pour chaque capteur $C_{jk}$ d'une alternative $A_k$ ($1 \leq j \leq N_k$) au moins deux

facteurs relatifs à l'utilisation du capteur $C_{jk}$ à partir de la durée $d$ associée au capteur et/ou du taux de charge $n$ associée au capteur. L'unité de calcul comprend en outre un multiplicateur 1704 configuré pour calculer le produit des facteurs relatifs à l'utilisation du capteur $C_{jk}$, ce qui fournit l'indicateur d'impact élémentaire $I_{jk}$ du capteur.

Dans un mode de réalisation, l'unité de calcul de l'indicateur d'impact élémentaire 170 comprend une unité de calcul de facteur de durée d'utilisation 1700 configurée pour calculer un facteur de durée d'utilisation du capteur $f(d)$ à partir de la durée d'utilisation $d$ associée au capteur dans l'alternative. Le facteur de durée d'utilisation du capteur $f(d)$ représente l'impact de l'utilisation d'un capteur $C_{jk}$ de l'alternative $A_k$ pendant la durée $d$.

La durée d'utilisation $d$ d'un capteur pour réaliser l'alternative $A_k$ permet ainsi de représenter le fait que plus le capteur est monopolisé longtemps, plus cela a un impact sur les capacités du système 100.

Dans un mode de réalisation, le facteur de durée d'utilisation peut être considéré comme linéaire. Dans un tel mode de réalisation, le facteur de durée d'utilisation $f(d)$ du capteur $C_{jk}$ peut être calculé en faisant le produit de la durée d'utilisation d associée au capteur dans l'alternative et d'une constante $K$, selon l'équation (2) :

$$f(d) = K \times d \quad (2)$$

La constante $K$ peut être identique pour tous les capteurs $C_{jk}$ de l'alternative $A_k$. Dans un mode de réalisation, la constante $K$ peut être identique pour tous les capteurs 2 du système 100.

L'unité de calcul d'indicateur d'impact élémentaire 170 peut comprendre en outre une unité de calcul de facteur de charge de capteur 1701 configurée pour calculer un facteur de charge du capteur $F(n, C)$ à partir d'un coefficient de charge $C$ du capteur et du taux d'utilisation n associé au capteur $C_{jk}$ dans l'alternative. Le coefficient de charge $C$ du capteur a la même unité que le taux de charge du capteur. Il peut être exprimé en pourcentage. Le coefficient de charge $C$ du capteur représente ainsi la charge du capteur ($C$%) avant l'utilisation des n%. Le facteur de charge du capteur $F(n, C)$ représente ainsi l'impact de l'utilisation des $n$% du capteur $C_{jk}$ en fonction de la charge du capteur ($C$%). Le facteur de charge du capteur $F(n, C)$ dépend ainsi du taux de charge du capteur n associé au capteur dans l'alternative $A_k$ et de la charge du capteur ($C$%) avant l'utilisation des n%.

Le facteur de charge du capteur $F(n, C)$ permet ainsi de tenir compte du fait que moins un capteur a de bande passante disponible, moins il est susceptible de pouvoir répondre aux demandes opérationnelle futures. Par exemple, dans un cas extrême, si un capteur donné n'a plus de bande passante disponible, le système 100 sera dans l'impossibilité de répondre à des demandes opérationnelles pour lesquelles toutes les alternatives ont besoin de ce capteur en particulier.

Un coefficient coef($x$) est donné à chaque valeur de la charge x d'un capteur, avec $x$ compris entre une valeur minimale de charge (par exemple 0) et une valeur maximale de charge (par exemple 100) d'un capteur, coef($x$) étant une fonction croissante quand $x$ est croissant.

Dans un mode de réalisation, le facteur de charge du capteur $F(n, C)$ est calculé selon l'équation (3):

$$F(n, C) = \int_{x=0}^{n} coef(C + x)$$

Le facteur de charge $F(n, C)$ peut ainsi être utilisé comme facteur multiplicatif pour la consommation de $n$% d'un capteur chargé à $C$%.

L'unité de calcul d'indicateur d'impact élémentaire 170 peut en outre comprendre une unité de calcul de criticité de capteur 1702 configurée pour calculer un facteur de criticité du capteur $f_{crit}$ représentant une valeur prédite de la criticité $C_{jk}$ du capteur à la date t en fonction de l'état de l'environnement du capteur à la date t.

Le calcul mis en oeuvre par l'unité de calcul de criticité de capteur 1702 pour déterminer le facteur de criticité $f_{crit}$ d'un capteur du capteur $C_{jk}$ dépend du type de capteur, la prévision de la criticité du capteur à la date t du capteur est spécifique à chaque capteur.

Le calcul mis en oeuvre par l'unité de calcul de criticité de capteur 1702 peut reposer sur une technique d'analyse de l'environnement du capteur implémentée en utilisant un ou plusieurs algorithmes d'analyse d'environnement de capteur.

Dans un mode de réalisation, le calcul mis en oeuvre par l'unité de calcul de criticité de capteur 1702 pour déterminer le facteur de criticité $f_{crit}$ d'un capteur du capteur $C_{jk}$ dépend du type de capteur, la prévision de la criticité du capteur à la date t du capteur étant spécifique à chaque capteur.

En particulier, le facteur de criticité du capteur $f_{crit}$ peut être calculé en utilisant une technique d'analyse de l'environnement du capteur estimé à la date t. Le facteur de criticité d'un capteur représente une probabilité d'utilisation de la ressource au vu de l'état de l'environnement à l'instant t. Le facteur de criticité du capteur est une valeur comprise entre une valeur minimale de criticité (par exemple proche de 0) indiquant que le capteur $C_{jk}$ est une ressource optionnelle et une valeur maximale de criticité (par exemple 100) indiquant que le capteur $C_{jk}$ représente une ressource nécessaire. Plus la valeur du facteur de criticité est proche de 0 plus sa probabilité d'utilisation (au vu de l'environnement à l'instant t) est faible. Plus le facteur de criticité a une valeur élevée, plus l'utilisation de la ressource est probable. Dans le cas d'une valeur élevée du facteur de criticité, l'utilisation de ressources de criticité inférieure (et donc de probabilité d'utilisation plus faible) peut être privilégiée, lorsque le choix est possible pour répondre à une demande opérationnelle.

La technique d'analyse permet ainsi d'estimer entre la valeur de criticité minimale et la valeur de criticité maximale à quel point le capteur sera critique dans l'environnement du capteur estimé à la date t.

La technique d'analyse utilisée pour estimer le facteur de criticité d'un capteur $C_{jk}$ peut être basée sur une logique booléenne ou une technique à base d'intelligence artificielle (par exemple et sans limitation une technique à base de logique floue ou de réseaux de neurones).

Par exemple, dans un exemple d'application de l'invention à un système 100 de détection de cible, pour un capteur de type caméra :

- si à la date *t,* dans l'environnement du capteur, il est estimé qu'aucune cible d'intérêt ne sera à sa portée, son facteur de criticité sera égal à la valeur de criticité minimale 0 ;

- si à la date *t,* il est estimé dans l'environnement du capteur qu'un nombre de cibles d'intérêts équivalent à sa capacité maximale d'analyse seront à sa portée, sa criticité sera proche de la valeur maximale de criticité (par exemple 100).

L'unité de calcul d'impact élémentaire peut alors déterminer l'indicateur d'impact élémentaire $I_{jk}$ du capteur $C_{jk}$ en effectuant le produit du facteur de durée d'utilisation $f(d)$, du facteur de charge du capteur $F(n, C)$, et du facteur de criticité $f_{crit}$.

Le facteur de criticité fournit ainsi une prévision de la criticité du capteur $C_{jk}$ à la date t en fonction de l'environnement dans lequel il évoluera à cette date.

Dans des modes de réalisation alternatifs, l'unité de sélection d'alternative optimale 15 peut appliquer d'autres critères de sélection des alternatives candidates.

En variante, l'unité de sélection d'alternative optimale 15 peut être remplacé par une unité de génération de recommandations configurée pour générer des recommandations d'alternatives de capteurs à utiliser sur une interface graphique, à partir des alternatives candidates, un opérateur pouvant sélectionner l'une des alternatives candidates en fonction des informations affichées.

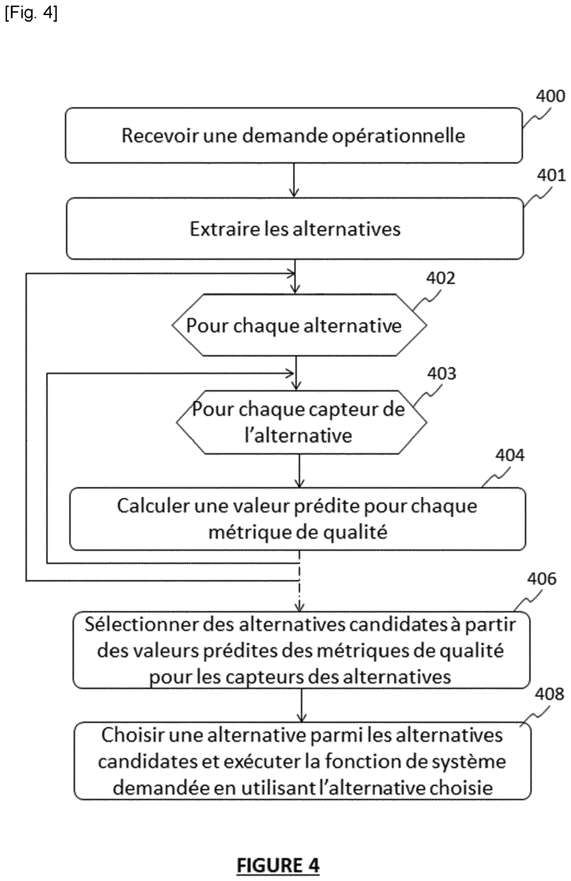

La figure 4 est un organigramme représentant le procédé de contrôle d'utilisation de capteurs selon des modes de réalisation.

A l'étape 400, une demande opérationnelle est reçue, la demande opérationnelle comprenant un type de fonction de système à exécuter, au moins une métrique de qualité, chaque métrique de qualité étant associée à une valeur cible (valeur minimale de la métrique de qualité à satisfaire lors de la mise en oeuvre de la fonction de système). La demande opérationnelle représente une requête d'exécution de fonction de système (par exemple demande de fonction de détection) nécessitant des données issues de capteurs.

A l'étape 402, des alternatives de capteurs sont extraites de la base de données de capteurs.

A l'étape 404, pour chaque alternative (bloc 401) et pour chaque capteur de l'alternative (bloc 403), des valeurs sont prédites pour chaque métrique de qualité spécifiée dans la demande opérationnelle.

A l'étape 406, un ensemble d'alternatives candidates sont sélectionnées à partir des valeurs prédites des T métriques de qualité pour les différents capteurs des alternatives. L'étape 406 peut comprendre, pour chaque alternative, un calcul de valeur prédite globale pour chaque métrique de qualité à partir des valeurs prédites pour la métrique de qualité pour les capteurs de l'alternative, la sélection des alternatives candidates étant effectuée à partir des valeurs prédites globales des T métriques de qualité obtenues pour chaque alternative. L'étape 406 peut en outre comprendre un filtrage des alternatives qui ne satisfont pas les valeurs cibles des métriques de qualité en comparant pour chaque alternative $A_k$ et pour chaque métrique de qualité $Mi$, la valeur prédite globale $Vi_k$ obtenue pour la métrique de qualité $Mi$ à la valeur cible de la métrique de qualité $Vi_{cible}$.

Dans un mode de réalisation, l'étape 406 peut comprendre une étape de calcul du poids d'utilité de chaque alternative à partir des valeurs prédites globales $Vi_k$ obtenues pour les différentes métriques pour l'alternative $A_k$ et de niveaux de priorité Pi associés à chaque métrique Mi. La sélection des alternatives candidates, est alors effectuée en fonction des poids d'utilité associés à chaque métrique de qualité, après l'étape de filtrage. Dans un mode de réalisation, la sélection des alternatives candidates peut comprendre la sélection des alternatives qui maximisent le poids d'utilité parmi les alternatives filtrées.

A l'étape 408, une alternative parmi les alternatives candidates sélectionnées est choisie et la fonction de système demandée dans la demande opérationnelle est mise en oeuvre en utilisant les données des capteurs associée à l'alternative choisie.

Les modes de réalisation de l'invention permettent ainsi de de transformer une demande opérationnelle en un ensemble d'alternatives d'utilisation des capteurs du système permettant de répondre à la demande et de sélectionner une liste d'alternatives candidate en fonction de l'utilité (ou plus-value) apporté au système par chaque alternative.

Les modes de réalisation de l'invention fournissent un dispositif et un procédé de contrôle des ressources capteurs capable d'optimiser l'utilisation des ressources capteurs du système multi-capteur. Ils permettent d'ajuster dynamiquement et en temps réel l'utilisation des ressources capteurs par le système parmi les ressources capteurs disponibles. Ils permettent ainsi de fournir une réponse optimisée aux demandes opérationnelles de ressources capteurs, tout en conservant la possibilité de répondre le mieux possible aux demandes de ressources capteurs ultérieures qui pourraient être reçues.

Les ressources capteurs du système 100 (par exemple plateforme aéroportée) peuvent ainsi être optimisées de manière à garantir qu'il puisse répondre le mieux possible aux demandes opérationnelle qu'il a reçues, tout en conservant la possibilité de répondre le mieux possible aux demandes qu'il pourrait recevoir. Le système 100 peut ainsi orchestrer lui-même l'utilisation des différents capteurs, de manière dynamique.

L'homme du métier comprendra que le dispositif de contrôle d'utilisation des capteurs 1 ou des sous-systèmes du dispositif 1 selon les modes de réalisation de l'invention peuvent être mis en oeuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

Par ailleurs, l'invention n'est pas limitée aux modes de réalisation décrits ci-avant à titre d'exemple non limitatif. Elle englobe toutes les variantes de réalisation qui pourront être envisagées par l'homme du métier. En particulier, l'invention n'est pas limitée aux systèmes multi-capteurs 100 cités dans la description à titre d'exemple non limitatif. L'invention n'est pas non plus limitée aux formules de calcul mis en oeuvre par le module de calcul 121 données ou aux métriques de qualité citées également à titre d'exemple non limitatif dans la description.

**Revendications**

1. Dispositif (1) de contrôle d'utilisation de capteurs d'un système multi-capteur, le système multi-capteur (100) étant équipé de plusieurs capteurs comprenant au moins deux capteurs, le système étant apte à exécuter une ou plusieurs fonctions de système, **caractérisé en ce qu'**il comprend :

   - une unité d'extraction d'alternatives d'utilisation de capteurs (11) configurée pour extraire un ensemble d'alternatives d'utilisation de capteurs d'une base de données d'alternatives (3) stockant un ensemble d'alternatives d'utilisation de capteurs, en réponse à la réception d'une requête indiquant un type de fonction du système et au moins une métrique de qualité, chaque alternative étant stockée dans la base de données (3) en correspondance avec une fonction de système, chaque alternative étant associée à au moins un capteur et comprenant pour chaque capteur associé, un taux d'utilisation du capteur et une durée d'utilisation du capteur audit taux d'utilisation, l'unité d'extraction étant configurée pour extraire les alternatives d'utilisation de capteurs associée à ladite fonction de système ;

   - une unité de prédiction (12) comprenant un ensemble de modèles de performance de capteur, l'unité de prédiction étant configurée pour appliquer à chaque alternative et pour chaque capteur associé à l'alternative, le modèle de performance de capteur correspondant au capteur, le modèle de performance de capteur fournissant pour ledit capteur une valeur prédite pour chaque métrique de qualité, la valeur prédite correspondant à la valeur estimée de la métrique de qualité pour une utilisation du capteur au taux d'utilisation et pendant la durée associée au capteur dans l'alternative ;

   - une unité de sélection d'alternatives candidates (14) configurée pour sélectionner au moins certaines desdites alternatives en fonction des valeurs prédites des métriques de qualité pour les capteurs de chaque alternative extraite.

2. Dispositif de contrôle d'utilisation de capteurs selon la revendication 1, **caractérisé en ce qu'**il comprend en outre un module de calcul (121) configuré pour calculer pour chaque alternative d'utilisation de capteurs une valeur prédite globale pour chaque métrique de qualité, la valeur prédite globale d'une métrique étant calculée à partir des valeurs prédites de la métrique de qualité pour tous les capteurs associés à l'alternative.

3. Dispositif de contrôle d'utilisation de capteurs selon la revendication 2, **caractérisé en ce que** le module de calcul (121) est en outre configuré pour calculer la valeur prédite globale d'une métrique à partir de paramètres relatifs au système, à la fonction de système indiquée dans la requête et/ou aux capteurs.

4. Dispositif de contrôle d'utilisation de capteurs selon l'une des revendications 2 ou 3, **caractérisé en ce que** l'unité de sélection d'alternatives candidates (14) est configurée pour filtrer au préalable les alternatives à partir des valeurs prédites globales des métriques de qualité calculées pour chaque alternative.

5. Dispositif de contrôle d'utilisation de capteurs selon la revendication 4, **caractérisé en ce que** chaque métrique de qualité est associée à une valeur cible dans la requête et **en ce que** le filtrage comprend une présélection des alternatives ayant pour chaque métrique de qualité une valeur prédite globale supérieure à la valeur cible de la métrique de qualité indiquée dans la requête, l'unité de sélection des alternatives candidates (14) étant configurée pour sélectionner les alternatives candidates parmi les alternatives présélectionnées.

6. Dispositif de contrôle d'utilisation de capteurs selon l'une des revendications précédentes, **caractérisé en ce que** chaque métrique de qualité spécifiée dans la requête est associée à un niveau de priorité, et **en ce que** le dispositif comprend une unité de calcul de poids d'alternative (16) représentant le poids d'utilité de l'alternative sur le système, l'unité de calcul de poids d'alternative étant configurée pour calculer le poids de l'alternative sur le système en prenant en compte les niveaux de priorité associés aux métriques de qualité.

7. Dispositif de contrôle d'utilisation de capteurs selon la revendication 6, **caractérisé en ce que** l'unité de calcul de poids d'alternative (16) est configurée pour calculer le poids d'utilité $w_k$ d'une alternative selon l'équation :

$$w_k = \sum_{i=1}^{T}(Pi * Vi_k),$$

où $Vi_k$ désigne la valeur prédite globale calculée pour une métrique de qualité $Mi$, $Pi$ désigne le niveau de priorité associé à la métrique dans la requête, et T désigne le nombre de métriques de qualité.

8. Dispositif de contrôle d'utilisation de capteurs selon la revendication 7, **caractérisé en ce que** l'unité de sélection (14) est configurée pour sélectionner au moins certaines des alternatives candidates en fonction des poids d'utilité associés aux alternatives.

9. Dispositif de contrôle d'utilisation de capteurs selon l'une des revendications 6 à 8, **caractérisé en ce que** le poids d'utilité est une valeur définie entre une valeur de poids minimale et une valeur de poids maximale.

10. Dispositif de contrôle d'utilisation de capteurs selon l'une des revendications précédentes 6 à 9, **caractérisé en ce qu'**il comprend une table de sélection de priorité associant pour chaque fonction du système, un niveau de priorité à chaque métrique de qualité, le dispositif étant configuré pour déterminer le niveau de priorité de chaque métrique de qualité à partir de la table de sélection de priorité, pour la fonction de système spécifiée dans la requête.

11. Dispositif de contrôle d'utilisation de capteurs selon l'une des revendications 6 à 9, **caractérisé en ce que** le niveau de priorité est défini pour chaque métrique de qualité dans la requête.

12. Dispositif de contrôle d'utilisation de capteurs selon l'une des revendications précédentes, **caractérisé en ce que** le modèle de performance de capteur est un modèle défini à partir d'une technique d'intelligence artificielle à base d'apprentissage sur des données réelles de performance, les données réelles comprenant des valeurs de métriques de qualité obtenues par le système pour des capteurs utilisés par le système pour exécuter chaque fonction de système.

13. Dispositif de contrôle d'utilisation de capteurs selon l'une des revendications précédentes, **caractérisé en ce que** chaque alternative comprend une valeur fixe pour le taux d'utilisation et la durée associée à chaque capteur.

14. Dispositif de contrôle d'utilisation de capteurs selon l'une des revendications précédentes 1 à 12, **caractérisé en ce que** chaque alternative comprend pour au moins un capteur de l'alternative, une plage de valeurs définie pour le taux d'utilisation et/ou la durée associée audit au moins un capteur, l'unité de prédiction étant configurée pour sélectionner au préalable, pour ledit au moins un capteur une valeur fixe dans la plage de valeur définie pour le taux d'utilisation et/ou la durée associée au capteur avant la détermination de valeurs prédites de métriques de qualité pour ledit capteur.

15. Procédé de contrôle d'utilisation de capteurs mis en oeuvre dans un système multi-capteur, le système multi-capteur étant équipé de plusieurs capteurs comprenant au moins deux capteurs, le système étant apte à exécuter une ou plusieurs fonctions de système, **caractérisé en ce que** le procédé comprend les étapes consistant à :

    - extraire (402) un ensemble d'alternatives d'utilisation de capteurs d'une base de données d'alternatives (3) stockant un ensemble d'alternatives d'utilisation de capteurs, en réponse à la réception d'une requête indiquant un type de fonction du système et au moins une métrique de qualité, chaque alternative étant stockée dans la base de données (3) en correspondance avec une fonction de système, chaque alternative étant associée à au moins un capteur et comprenant pour chaque capteur associé, un taux d'utilisation du capteur et une durée correspondant à une durée d'utilisation du capteur selon ledit taux d'utilisation, l'étape d'extraction comprenant l'extraction des alternatives d'utilisation de capteurs associée à ladite fonction de système ;

- appliquer (404) à chaque alternative et pour chaque capteur associé à l'alternative, un modèle de performance de capteur correspondant au capteur, le modèle de performance de capteur fournissant pour ledit capteur une valeur prédite pour chaque métrique de qualité, la valeur prédite correspondant à la valeur estimée de la métrique de qualité pour une utilisation du capteur au taux d'utilisation et pendant la durée associée au capteur dans l'alternative ; et
- sélectionner (406) au moins certaines desdites alternatives en fonction des valeurs prédites des métriques de qualité pour les capteurs de chaque alternative extraite.

**Patentansprüche**

1. Vorrichtung (1) zum Steuern der Nutzung von Sensoren eines Multisensorsystems, wobei das Multisensorsystem (100) mit einer Vielzahl von Sensoren ausgestattet ist, die mindestens zwei Sensoren umfassen, wobei das System eine oder mehrere Systemfunktionen ausführen kann, **dadurch gekennzeichnet, dass** es Folgendes umfasst:

   - eine Sensornutzungsalternativen-Extraktionseinheit (11), konfiguriert zum Extrahieren eines Satzes von Sensornutzungsalternativen aus einer Alternativen-Datenbank (3), die einen Satz von Sensornutzungsalternativen speichert, als Reaktion auf den Empfang einer Anforderung, die einen Funktionstyp des Systems und mindestens eine Qualitätsmetrik angibt, wobei jede Alternative in der Datenbank (3) entsprechend einer Systemfunktion gespeichert wird, wobei jede Alternative mit mindestens einem Sensor assoziiert ist und für jeden assoziierten Sensor einen Nutzungsgrad des Sensors und eine Nutzungsdauer des Sensors bei dem Nutzungsgrad umfasst, wobei die Extraktionseinheit zum Extrahieren der mit der Systemfunktion assoziierten Sensornutzungsalternativen konfiguriert ist;
   - eine Vorhersageeinheit (12), die einen Satz von Sensorleistungsmodellen umfasst, wobei die Vorhersageeinheit zum Anwenden des dem Sensor entsprechenden Sensorleistungsmodells auf jede Alternative und für jeden mit der Alternative assoziierten Sensor konfiguriert ist, wobei das Sensorleistungsmodell für den Sensor einen Vorhersagewert für jede Qualitätsmetrik bereitstellt, wobei der Vorhersagewert dem geschätzten Wert der Qualitätsmetrik für eine Nutzung des Sensors bei dem Nutzungsgrad und für die mit dem Sensor in der Alternative assoziierte Dauer entspricht;
   - eine Kandidatenalternativen-Auswahleinheit (14), die zum Auswählen mindestens einiger der Alternativen in Abhängigkeit von den Vorhersagewerten der Qualitätsmetriken für die Sensoren jeder extrahierten Alternative konfiguriert ist.

2. Vorrichtung zum Steuern der Nutzung von Sensoren nach Anspruch 1, **dadurch gekennzeichnet, dass** sie ferner ein Berechnungsmodul (121) umfasst, das zum Berechnen, für jede Sensornutzungsalternative, eines globalen Vorhersagewerts für jede Qualitätsmetrik konfiguriert ist, wobei der globale Vorhersagewert einer Metrik auf der Basis der Vorhersagewerte der Qualitätsmetrik für alle mit der Alternative assoziierten Sensoren berechnet wird.

3. Vorrichtung zum Steuern der Nutzung von Sensoren nach Anspruch 2, **dadurch gekennzeichnet, dass** das Berechnungsmodul (121) ferner zum Berechnen des globalen Vorhersagewerts einer Metrik auf der Basis von Parametern in Bezug auf das System, die in der Anforderung angegebene Systemfunktion und/oder die Sensoren konfiguriert ist.

4. Vorrichtung zum Steuern der Nutzung von Sensoren nach Anspruch 2 oder 3, **dadurch gekennzeichnet, dass** die Kandidatenalternativen-Auswahleinheit (14) zum Vorabfiltern der Alternativen auf der Basis der globalen Vorhersagewerte der für jede Alternative berechneten Qualitätsmetriken konfiguriert ist.

5. Vorrichtung zum Steuern der Nutzung von Sensoren nach Anspruch 4, **dadurch gekennzeichnet, dass** jede Qualitätsmetrik mit einem Zielwert in der Anforderung assoziiert ist, und dadurch, dass das Filtern eine Vorabauswahl der Alternativen umfasst, die für jede Qualitätsmetrik einen globalen Vorhersagewert haben, der größer ist als der Zielwert der in der Anforderung angegebenen Qualitätsmetrik, wobei die Kandidatenalternativen-Auswahleinheit (14) zum Auswählen der Kandidatenalternativen aus den vorgewählten Alternativen konfiguriert ist.

6. Vorrichtung zum Steuern der Nutzung von Sensoren nach einem der vorhergehenden Ansprüche, **dadurch gekennzeichnet, dass** jede in der Anforderung spezifizierte Qualitätsmetrik mit einer Prioritätsstufe assoziiert ist, und dadurch, dass die Vorrichtung eine Einheit (16) zur Berechnung der Alternativengewichtung umfasst, die die Nutzungsgewichtung der Alternative auf dem System darstellt, wobei die Einheit zur Berechnung der Alternativengewichtung zum Berechnen der Gewichtung der Alternative auf dem System unter Berücksichtigung der mit den Qualitätsmetriken assoziierten Prioritätsstufen konfiguriert ist.

7. Vorrichtung zum Steuern der Nutzung von Sensoren nach Anspruch 6, **dadurch gekennzeichnet, dass** die Einheit (16) zur Berechnung der Alternativengewichtung konfiguriert ist zum Berechnen der Nutzungsgewichtung $w_k$ einer Alternative gemäß der Gleichung:

$$w_k = \sum_{i=1}^{T} (Pi * Vi_k),$$

worin $Vi_k$ den für eine Qualitätsmetrik $Mi$ berechneten globalen Vorhersagewert bezeichnet, $Pi$ die mit der Metrik in der Anforderung assoziierte Prioritätsstufe bezeichnet und T die Anzahl der Qualitätsmetriken bezeichnet.

8. Vorrichtung zum Steuern der Nutzung von Sensoren nach Anspruch 7, **dadurch gekennzeichnet, dass** die Auswahleinheit (14) zum Auswählen mindestens einiger der Kandidatenalternativen in Abhängigkeit von den mit den Alternativen assoziierten Nutzungsgewichtungen konfiguriert ist.

9. Vorrichtung zum Steuern der Nutzung von Sensoren nach einem der Ansprüche 6 bis 8, **dadurch gekennzeichnet, dass** die Nutzungsgewichtung ein zwischen einem minimalen Gewichtungswert und einem maximalen Gewichtungswert definierter Wert ist.

10. Vorrichtung zum Steuern der Nutzung von Sensoren nach einem der Ansprüche 6 bis 9, **dadurch gekennzeichnet, dass** sie eine Prioritätsauswahltabelle umfasst, die für jede Funktion des Systems mit jeder Qualitätsmetrik eine Prioritätsstufe assoziiert, wobei die Vorrichtung zum Bestimmen der Prioritätsstufe jeder Qualitätsmetrik auf der Basis der Prioritätsauswahltabelle für die in der Anforderung spezifizierte Systemfunktion konfiguriert ist.

11. Vorrichtung zum Steuern der Nutzung von Sensoren nach einem der Ansprüche 6 bis 9, **dadurch gekennzeichnet, dass** die Prioritätsstufe für jede Qualitätsmetrik in der Anforderung definiert wird.

12. Vorrichtung zum Steuern der Nutzung von Sensoren nach einem der vorhergehenden Ansprüche, **dadurch gekennzeichnet, dass** das Sensorleistungsmodell ein Modell ist, das auf der Basis einer lembasierten Künstliche-Intelligenz-Technik an realen Leistungsdaten definiert ist, wobei die realen Daten Werte von Qualitätsmetriken umfassen, die vom System für Sensoren erhalten werden, die von dem System zum Ausführen jeder Systemfunktion verwendet werden.

13. Vorrichtung zum Steuern der Nutzung von Sensoren nach einem der vorhergehenden Ansprüche, **dadurch gekennzeichnet, dass** jede Alternative einen festen Wert für die Nutzungsrate und die mit jedem Sensor assoziierte Dauer umfasst.

14. Vorrichtung zum Steuern der Nutzung von Sensoren nach einem der vorhergehenden Ansprüche 1 bis 12, **dadurch gekennzeichnet, dass** jede Alternative für mindestens einen Sensor der Alternative einen Wertebereich umfasst, der für die Nutzungsrate und/oder die mit dem mindestens einen Sensor assoziierte Dauer definiert ist, wobei die Vorhersageeinheit zum Vorabauswählen, für den mindestens einen Sensor, eines festen Wertes innerhalb des Wertebereichs konfiguriert ist, der für die Nutzungsrate und/oder die mit dem Sensor assoziierte Dauer vor dem Bestimmen von Vorhersagewerten von Qualitätsmetriken für den Sensor definiert ist.

15. Verfahren zum Steuern der Nutzung von Sensoren, implementiert in einem Multisensorsystem, wobei das Multisensorsystem mit einer mindestens zwei Sensoren umfassenden Vielzahl von Sensoren ausgestattet ist, wobei das System eine oder mehrere Systemfunktionen ausführen kann, **dadurch gekennzeichnet, dass** das Verfahren die folgenden Schritte umfasst:

   - Extrahieren (402) eines Satzes von Sensornutzungsalternativen aus einer Alternativen-Datenbank (3), die einen Satz von Sensornutzungsalternativen speichert, als Reaktion auf den Empfang einer Anforderung, die einen Funktionstyp des Systems und mindestens eine Qualitätsmetrik angibt, wobei jede Alternative in der Datenbank (3) entsprechend einer Systemfunktion gespeichert wird, wobei jede Alternative mit mindestens einem Sensor assoziiert ist und für jeden assoziierten Sensor eine Nutzungsrate des Sensors und eine einer Nutzungsdauer des Sensors gemäß der Nutzungsrate entsprechende Dauer umfasst, wobei der Extraktionsschritt das Extrahieren von mit der Systemfunktion assoziierten Sensornutzungsalternativen umfasst;
   - Anwenden (404), auf jede Alternative und für jeden mit der Alternative assoziierten Sensor, eines Sensorleistungsmodells entsprechend dem Sensor, wobei das Sensorleistungsmodell für den Sensor einen Vorhersagewert für jede Qualitätsmetrik bereitstellt, wobei der Vorhersagewert dem geschätzten Wert der Qualitätsmetrik für eine Nutzung des Sensors mit der Nutzungsrate und für die mit dem Sensor in der Alternative assoziierte Dauer entspricht; und
   - Auswählen (406) mindestens einiger der Alternativen in Abhängigkeit von den Vorhersagewerten der Qualitätsmetriken für die Sensoren jeder extrahierten Alternative.

## Claims

1. A device (1) for controlling the use of sensors of a multi-sensor system, the multi-sensor system (100) being equipped with a plurality of sensors comprising at least two sensors, the system being able to execute one or more system functions, **characterised in that** it comprises:

   - a unit (11) for extracting alternatives for use of sensors configured to extract a set of sensors use alternatives from an alternative database (3) storing a set of sensors uses alternative, in response to receiving a request indicating a type of function of the system and at least one quality metric, each alternative being stored in the database (3) in correspondence with a system function, each alternative being associated with at least one sensor and comprising, for each associated sensor, a rate of use of the sensor and a duration of use of the sensor at said rate of use, the extraction unit being configured to extract the sensors use alternatives associated with said system function;
   - a prediction unit (12) comprising a set of sensor performance models, the prediction unit being configured to apply, to each alternative and for each sensor associated with the alternative, the sensor performance model corresponding to the sensor, the sensor performance model providing a predicted value for each quality metric for said sensor, the predicted value corresponding to the estimated value of the quality metric for use of the sensor at the rate of use and for the duration associated with the sensor in the alternative;
   - a unit (14) for selecting candidate alternatives configured to select at least some of said alternatives as a function of the predicted values of the quality metrics for the sensors of each extracted alternative.

2. The device for controlling the use of sensors according to claim 1, **characterised in that** it further comprises a computation module (121) configured to compute, for each sensors use alternative, a global predicted value for each quality metric, the global predicted value of a metric being computed from the predicted values of the quality metric for all the sensors associated with the alternative.

3. The device for controlling the use of sensors according to claim 2, **characterised in that** the computation module (121) is further configured to compute the overall predicted value of a metric from parameters related to the system, to the system function indicated in the request and/or to the sensors.

4. The device for controlling the use of sensors according to one of claims 2 or 3, **characterised in that** the unit (14) for selecting candidate alternatives is configured to previously filter the alternatives from the overall predicted values of the quality metrics computed for each alternative.

5. The device for controlling the use of sensors according to claim 4, **characterised in that** each quality metric is associated with a target value in the request and **in that** the filtering comprises preselecting the alternatives having, for each quality metric, a global predicted value greater than the target value of the quality metric indicated in the request, the unit (14) for selecting candidate alternatives being configured to select the candidate alternatives from among the preselected alternatives.

6. The device for controlling the use of sensors according to any of the preceding claims, **characterised in that** each quality metric specified in the request is associated with a priority level, and **in that** the device comprises a unit (16) for computing an alternative weight representing the utility weight of the alternative on the system, the unit for computing an alternative weight being configured to compute the weight of the alternative on the system taking into account the priority levels associated with the quality metrics.

7. The device for controlling the use of sensors according to claim 6, **characterised in that** the unit (16) for computing an alternative weight is configured to compute the utility weight $w_k$ of an alternative according to the following equation:

$$w_k = \sum_{i=1}^{T}(Pi * Vi_k),$$

   where $Vi_k$ denotes the global predicted value computed for a quality metric *Mi, Pi* denotes the priority level associated with the metric in the request, and T denotes the number of quality metrics.

8. The device for controlling the use of sensors according to claim 7, **characterised in that** the selection unit (14) is configured to select at least some of the candidate alternatives as a function of the utility weights associated with the alternatives.

9. The device for controlling the use of sensors according to any of claims 6 to 8, **characterised in that** the utility weight is a value defined between a minimum weight value and a maximum weight value.

10. The device for controlling the use of sensors according to any of the preceding claims 6 to 9, **characterised in that** it comprises a priority selection table associating, for each function of the system, a priority level with each quality metric, the device being configured to determine the priority level of each quality metric from the priority selection table, for the system function specified in the request.

11. The device for controlling the use of sensors according to any of claims 6 to 9, **characterised in that** the priority level is defined for each quality metric in the request.

12. The device for controlling the use of sensors according to any of the preceding claims, **characterised in that** the sensor performance model is a model defined from a learning-based artificial intelligence technique on actual performance data, the actual data comprising values of quality metrics acquired by the system for sensors used by the system to execute each system function.

13. The device for controlling the use of sensors according to any of the preceding claims, **characterised in that** each alternative comprises a fixed value for the rate of use and the duration associated with each sensor.

14. The device for controlling the use of sensors according to any of the preceding claims 1 to 12, **characterised in that** each alternative comprises, for at least one sensor of the alternative, a range of values defined for the rate of use and/or the duration associated with said at least one sensor, the prediction unit being configured to previously select, for said at least one sensor, a fixed value in the value range defined for the rate of use and/or the duration associated with the sensor before determining predicted values of quality metrics for said sensor.

15. A method for controlling the use of sensors implemented in a multi-sensor system, the multi-sensor system being equipped with a plurality of sensors comprising at least two sensors, the system being able to execute one or more system functions, **characterised in that** the method comprises the steps of:

- extracting (402) a set of sensors use alternatives from an alternative database (3) storing a set of sensors use alternatives, in response to receiving a request indicating a type of function of the system and at least one quality metric, each alternative being stored in the database (3) in correspondence with a system function, each alternative being associated with at least one sensor and comprising, for each associated sensor, a rate of use of the sensor and a duration corresponding to a duration of use of the sensor according to said rate of use, the extraction step comprising extracting sensors use alternatives associated with said system function;
- applying (404), to each alternative and for each sensor associated with the alternative, a sensor performance model corresponding to the sensor, the sensor performance model providing a predicted value for each quality metric for said sensor, the predicted value corresponding to the estimated value of the quality metric for use of the sensor at the rate of use and for the duration associated with the sensor in the alternative; and
- selecting (406) at least some of said alternatives as a function of the predicted values of the quality metrics for the sensors of each extracted alternative.

[Fig. 1]

FIGURE 1

[Fig. 2]

**FIGURE 2**

[Fig. 3A]

FIGURE 3A

[Fig. 3B]

FIGURE 3B

[Fig. 4]

400

Recevoir une demande opérationnelle

401

Extraire les alternatives

402

Pour chaque alternative

403

Pour chaque capteur de l'alternative

404

Calculer une valeur prédite pour chaque métrique de qualité

406

Sélectionner des alternatives candidates à partir des valeurs prédites des métriques de qualité pour les capteurs des alternatives

408

Choisir une alternative parmi les alternatives candidates et exécuter la fonction de système demandée en utilisant l'alternative choisie

**FIGURE 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Novel radar techniques and applications. Vol.2: Waveform diversity and cognitive radar, and target tracking and data fusion Herts. **KLEMM, RICHARD ; GRIFFITHS, HUGH ; KOCH, WOLFGANG.** Sensor Management for Radar Networks. SciTech Publishing, 2017

- **FREITAS ALLAN et al.** Response Surface Modeling for Networked Radar Resource Allocation. *2018 21 ST INTERNATIONAL CONFERENCE ON INFORMATION FUSION, ISIF,* 10 Juillet 2018, 1-7